(19) Europäisches Patentamt
European Patent Office
Office européen des brevets

(11) **EP 2 462 816 B1**

(12) # EUROPÄISCHE PATENTSCHRIFT

(45) Veröffentlichungstag und Bekanntmachung des Hinweises auf die Patenterteilung:
**27.03.2013 Patentblatt 2013/13**

(51) Int Cl.:
*A23L 1/01* (2006.01)     *A47J 27/62* (2006.01)
*A47J 36/32* (2006.01)

(21) Anmeldenummer: **11192985.7**

(22) Anmeldetag: **12.12.2011**

(54) **Verfahren zur Berücksichtigung eines Wasserverlustes während eines Garvorganges und Gargerät unter Einsatz dieses Verfahrens**

Method for including water loss during a cooking procedure and cooking pan using this method

Procédé de prise en compte d'une perte d'eau lors d'un processus de cuisson et appareil de cuisson utilisant ce procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2010 DE 102010054353**

(43) Veröffentlichungstag der Anmeldung:
**13.06.2012 Patentblatt 2012/24**

(73) Patentinhaber: **MKN Maschinenfabrik Kurt Neubauer GmbH & Co.**
**38300 Wolfenbüttel (DE)**

(72) Erfinder: **Helm, Peter**
**38304 Wolfenbütttel (DE)**

(74) Vertreter: **Strobel, Wolfgang**
**Kroher-Strobel**
**Rechts- und Patentanwälte**
**Bavariaring 20**
**80336 München (DE)**

(56) Entgegenhaltungen:
**EP-A1- 0 520 565     EP-A2- 1 199 015**

**Beschreibung**

Die Erfindung betrifft ein Verfahren zur Berücksichtigung eines Wasserverlustes während eines Garvorganges in einem Gargerät mit einer Energieversorgungseinrichtung, die einem Gargut oder einem Gargefäß mit darin befindlichem Gargut zur Durchführung des Garvorganges Energie über Heizmittel zuführt.

Bei der Zubereitung von Lebensmitteln zu warmen Speisen für den Verzehr werden Garvorgänge durchgeführt, häufig in Form von Kochvorgängen oder Bratvorgängen. Die Garvorgänge werden in Gargeräten durchgeführt, beispielsweise in Tiegeln oder anderen Gefäßen wie etwa Bratpfannen oder Pfannen, auch solchen mit zu öffnendem Deckel. Auch Heißluftdämpfer, Backöfen und damit verwandte Geräte werden eingesetzt.

Es kann vorkommen, dass es während eines Garvorganges zum Überkochen oder Überfließen kommt, hervorgerufen durch die Zugabe von zu großen Mengen oder anderen Fehlbedienungen. Hierfür schlägt die DE 82 23 560 U1 ein Kochgefäß vor, welches eine den Rand des Kochgefäßes umgebende Mulde zum Auffangen des überfließenden Flüssigkeitsanteils besitzt, wobei diese Mulde mit einem Kanal im Boden versehen ist, der das übergekochte Gut in das Kochgefäß zurückfließen lässt.

Aus der DE 100 43 771 C2 ist ein Gargerät bekannt, welches mittels Flüssigkeitsdurchflusssensoren überprüft, welche Flüssigkeitsmengen etwa zur Beschwadung, zum Ablöschen oder zur Reinigung einem Garraum zugeführt wird und welche Wassermengen aus dem Garraum abgeführt werden, etwa durch einen Abfluss.

Der Flüssigkeitsdurchflussmesser ist störanfällig, er benötigt Bauraum und ist auch kostenaufwendig. Daher wird in der DE 10 2004 012 824 A1 vorgeschlagen, die Füllmengen im Garraum bei Reinigungsvorgängen durch die Messung der Drehzahl oder der Leistungsaufnahme eines Gebläses im Garraum zu bestimmen.

Derartige Maßnahmen, die geeignet sind, Angaben über Wassermengen während eines Reinigungsvorganges abzugeben, sind keineswegs automatisch geeignet, auch Angaben über Wasserverluste während eines Garvorganges zu machen, zumal es bei Garvorgängen auch nicht um Wasserverlust in flüssiger Form, sondern in Form von verdampftem Wasser geht.

Neben einem Wasserverlust durch Fehlbedienungen wie in der DE 82 23 560 U1 beschrieben gibt es jedoch auch einen Wasserverlust, der bei nahezu jedem Garvorgang auftritt und bei Garvorgängen etwa in Tiegeln oder Bratpfannen praktisch stets zu beobachten ist.

Durch das Garen in einem Tiegel oder einem anderen geeigneten Gargefäß wird auf Grund des Siedevorganges Wasser in Dampf umgewandelt, welches dann den Tiegel in Form von Dampfblasen verlässt. Dieser Vorgang tritt bei praktisch allen drucklosen Kochvorgängen von wasserhaltigem Gargut in einem Tiegel, Topf oder dergleichen auf. Dieser Wasserverlust des Garguts ist insbesondere bei längeren Garzeiten keineswegs unerheblich.

Aus der EP 0 520 565 A1 ist ein Verfahren bekannt, bei dem in die Fortkochleistung einer Kochplatte eingegriffen wird, um durch eine automatisch geregelte Zufuhr von Heizenergie gerade so viel Wasser bei atmosphärem Druck zu verdampfen, dass die Restluft aus dem Topf nach außen verdrängt wird.

Aus der EP 1 847 203 A1 ist ein Vorschlag bekannt, einen Dampfaustritt aus dem Garraum unter Zuhilfenahme zusätzlicher Sensoren zu detektieren, um ein Austrocknen des Garguts zu vermeiden. Es geht dabei um große Gargutstücke, die frei einer Atmosphäre ausgesetzt sind und es ist daher zu verhindern, dass die Oberfläche des Garguts eine Temperatur von wesentlich mehr als 100 °C erreicht. Eine solche Vorgehensweise ist beispielsweise bei Tiegeln und Gargütern, die in einem Flüssigkeitsspiegel liegen, weder sinnvoll noch möglich.

Ein weiterer Vorschlag zum Einsatz von Sensoren für das Feststellen von austretendem Wasserdampf aus einem Garraum ist aus der DE 10 2008 036 684 A1 bekannt, wobei dort die Bestimmung der Druckdifferenz in einem Kanal eine Rolle spielt, durch den der Wasserdampf austreten kann. Diese Möglichkeit ist also nicht brauchbar, wenn es sich um offene Garräume handelt.

In der DE 100 52 137 A1 und der EP 1 199 015 A2 wird eine Möglichkeit beschrieben, wie man die Erzeugung überschüssigen Dampfes vermeiden kann, welcher unnötig an die Umgebung abgegeben werden müsste. Hier wird der Umstand eingesetzt, dass sich bei erhöhtem Druck im Garraum die Siedetemperatur von Wasser erhöht. Diese Möglichkeit ist ebenfalls nicht einsetzbar, wenn ein Garvorgang bei offenem Deckel durchgeführt werden soll, da dann kein erhöhter Druck erzeugbar ist.

In der DE 41 36 133 A1 wird für einen geschlossenen und mit der Außenluft nur über ein Messrohr verbundenen Topf vorgeschlagen, mittels Sensoren die Temperatur des Gargutes und einen zur Erfassung des Dampfpunktes der im Topf vorhandenen Flüssigkeit geeigneten weiteren Sensor einzusetzen und die Daten der Sensoren in einer Elektronik auszuwerten. Diese Konzeption ist lediglich für geschlossene Kochtöpfe geeignet und für andere Gargeräte nicht anwendbar.

Keiner der vorgenannten Vorschläge ist dazu gedacht oder geeignet, sich mit dem Wasserverlust bei wasserhaltigem Gargut in Tiegeln, Töpfen oder dergleichen zu beschäftigen oder die damit verbundenen Probleme zu lösen.

In der Regel weisen Gargeräte beziehungsweise Gargeräteteile mit einem Tiegel oder einem ähnlichen Gargefäß eine beheizte Bodenfläche und unter Umständen auch eine beheizte Mantelfläche auf. Die Energiezufuhr für den Garvorgang erfolgt dabei beispielsweise über Strahlungsheizkörper, Gasflammen, Induktionseinrichtungen oder auch mittels Widerstandsheizkörpem, die einen direkten Kontakt mit dem Tiegelboden haben.

Bei vielen Garvorgängen ist es erforderlich oder wünschenswert, den auf diese Weise entstandenen Wasserverlust am Ende oder gegen Ende des Garvorganges durch eine Wasserzugabe wieder auszugleichen. Dies erfolgt in der Praxis üblicherweise dadurch, dass ein Bediener die Wassermenge manuell nach seiner persönlichen Schätzung wieder hinzugibt. Um die richtige Wassermenge abzuschätzen und durch eine manuell abgemessene Wassermenge zu ersetzen, benötigt man Fachkenntnisse, beispielsweise eine Ausbildung als Koch oder auf jeden Fall eine erhebliche kochtechnische Erfahrung, um aus dem Aussehen und der Erscheinungsform einer nahezu zubereiteten Speise auf eine im jeweils gegebenen Einzelfall angebrachte zuzugebende Wassermenge schließen zu können.

Dies ist problematisch, zumal die Hinzugabe von ersatzweisen Wassermengen an sich eine Aufgabe ist, die man gerne Hilfspersonal übertragen würde. Der bei der Zubereitung tätige Koch wird darüber hinaus durch die bisherige Vorgehensweise dazu gezwungen, in einem relativ fest vorgegebenen Moment sich dieser Aufgabe zu widmen, wodurch er anderen, ebenfalls wichtigen Tätigkeiten entzogen wird.

Darüber hinaus sind derartige Schätzvorgänge natürlich stets eine erhebliche Fehlerquelle. Wird zu wenig Wasser hinzugegeben, könnte die zubereitete Speise unter Umständen zu trocken werden; wird zu viel Wasser hinzugegeben, so schwimmt die zuzubereitende Speise in einem Wasserüberschuss, welcher dann auch nachträglich nur schlecht entfernt werden kann, da er einen Teil der in der zuzubereitenden Speise enthaltenen Gewürze und Geschmackselemente enthält.

Das Gargut kann beispielsweise auch eine Soße sein, die in dem Gefäß erhitzt werden soll. Gerade auch bei Soßen wird es gewünscht, dass die während der Zubereitung verloren gegangenen Wassermengen nach oder gegen Ende der Zubereitung wieder ersetzt werden.

Wünschenswert wäre es daher, wenn man eine Möglichkeit hätte, mit der auf möglichst einfache Weise eine Berücksichtigung, zumindest aber eine Bestimmung der wieder zuzusetzenden und auszugleichenden Wassermenge erfolgen könnte. Besonders wünschenswert wäre es, wenn diese Möglichkeit auch von Nicht-Fachleuten genutzt werden könnte.

Aufgabe der Erfindung ist es daher, eine einfache Möglichkeit zu finden, diese Wassermenge zu bestimmen, die am Ende oder gegen Ende des Garvorganges wieder hinzugegeben werden soll.

Diese Aufgabe wird bei einem gattungsgemäßen Verfahren mit der Erfindung dadurch gelöst, dass während des Garvorganges ermittelt wird, welche Menge an Energie von der Energieversorgungseinrichtung abgegeben und dem Gargut oder Gargefäß zugeführt wird, dass unter Berücksichtigung dieser von der Energieversorgungseinrichtung abgegebenen Energiemenge ermittelt wird, welche Menge an Energie zum Wasserverlust durch Verdampfung des in dem Gargut enthaltenen Wassers beigetragen hat, und dass aus dieser Energiemenge auf den Wasserverlust geschlossen wird.

Auf diese Weise wird technisch sehr einfach und zuverlässig eine Möglichkeit gefunden, die Wassermenge abzuschätzen, die während des Garvorganges der zuzubereitenden Speise, also dem Gargut, entzogen worden ist.

Diese Menge kann dem Benutzer angezeigt werden, etwa durch eine optische oder eine akustische Anzeige. Der Benutzer benötigt keine besonderen Fachkenntnisse, um eine ihm auf diese Weise gegebene Information über eine Volumen- oder Gewichtsmenge an Wasser umzusetzen und genau diese Volumen- oder Gewichtsmenge an Wasser abzufüllen und dem Gargut wieder hinzuzuführen.

Von besonderem Vorteil ist es dabei, wenn der Wasserverlust dadurch ausgeglichen wird, dass über eine automatische Wasserdosierung die Wassermenge dem Gargut automatisch in der ermittelten Menge des Wasserverlustes wieder zugeführt wird.

Bei dieser besonders bevorzugten Ausführungsform wird darüber hinaus nicht nur die ermittelte Menge dem Benutzer angezeigt, sondern sie kann automatisch auch dadurch berücksichtigt werden, dass sie von dem Gargerät selbst in der gerade ermittelten Menge dem Gargut zu einem geeigneten oder vorbestimmten Zeitpunkt wieder zugeführt wird.

Dabei ist es zum Einen möglich, dies zunächst auf Anzeige dem Nutzer nur vorzuschlagen und erst nach Bestätigung durch den Nutzer durchzuführen, damit dieser noch eine Eingriffsmöglichkeit behält, wenn er ausnahmsweise diese Zugabe nicht wünscht oder die Menge ändern möchte. Alternativ kann die Regelung des Gargerätes auch so vorgesehen werden, dass ohne eine solche Rückfrage automatisch die Zufuhr der ermittelten Wassermenge erfolgt.

Die Erfindung arbeitet mit einer unerwarteten Idee. An sich wäre ein Ansatz für eine solche Bestimmung einer Wassermenge zu erwarten gewesen, der etwa mit Gewichtssensoren oder Füllstandssensoren arbeitet und feststellt, wie viel Wasser einem Gargut während eines Garvorganges verloren geht. Derartige Sensoren wären jedoch relativ aufwändig und auch kostspielig und darüber hinaus auch technisch anfällig. Bisher ist auch kein praktischer Versuch für derartige Ideen bekannt geworden. Bisher sind ausschließlich manuelle Nachfüllmethoden in der Praxis eingesetzt worden.

Die Erfindung schafft es nun, den Wasserverlust während des Garvorganges ohne derartige oder verwandte Sensoren zu bestimmen.

Stattdessen wird der Verbrauch einer bestimmten Energiemenge näher betrachtet. Eine zugeführte Energiemenge während eines Garvorganges kann nämlich bei Gargeräten vergleichsweise leicht ermittelt werden. Dies gilt insbesondere bei Gargeräten, die über eine elektronische Gerätesteuerung verfügen. Die im Gargerät installierte Heizleistung ist bekannt und die Einschaltdauer der Beheizung während eines Garvorganges kann vergleichsweise leicht ermittelt werden, da sie durch das Gargerät selbst vorgegeben wird.

Da üblicherweise ein Temperaturregler in einer elektronischen Gerätesteuerung die Heizmittel eigenständig ein- oder ausschaltet, kann die Steuerung die Einschaltdauer mittels entsprechender Zähler oder Integratoren leicht ermitteln. Zusätzliche Sensoren werden nicht benötigt.

Im Ergebnis wird die Einschaltdauer der Beheizung mit der im Gargerät installierten Heizleistung multipliziert und ergibt auf diese Weise die eingesetzte Energie.

Dieser vergleichsweise grobe Wert kann noch modifiziert werden. So ist es natürlich bei einem Gargerät mit mehrstufigen Heizmitteln möglich, dies entsprechend zu berücksichtigen, indem festgestellt wird, über welchen Zeitraum die Heizmittel eine bestimmte Energie verbraucht und somit an das Gargut abgegeben haben.

Eine noch weitere Modifizierung mit einer besonders bevorzugten Ausführungsform berücksichtigt darüber hinaus, dass bei dem ersten Teilbereich des Garvorganges das Garprodukt noch eine Temperatur unterhalb des Siedepunktes von Wasser besitzt. Liegt die Temperatur des Gargutes noch unterhalb des Siedepunktes von Wasser, so verdampft auch noch verhältnismäßig wenig in dem Gargut vorhandenes Wasser. Die zugeführte Heizenergie dient während dieses Abschnittes des Garvorganges im Wesentlichen zur Erwärmung des Kochgutes. Man kann daher diese Phase des Garvorganges bei der Ermittlung der zugeführten Energie unberücksichtigt lassen, da diese Energie nicht zu einem Wasserverlust des Gargutes führt.

Für diese modifizierte Ausführungsform wird zusätzlich eine Bestimmung des Zeitpunktes erforderlich, an dem das Gargut den Siedepunkt erreicht. Hierzu können geeignete Temperaturfühler eingesetzt werden, die häufig ohnehin in Gargeräten insbesondere mit elektronischer Gerätesteuerung zu anderen Zwecken eingesetzt werden, beispielsweise sogenannte Kerntemperaturfühler, die für die Optimierung des Zubereitungsvorganges die Kerntemperatur des Gargutes abfühlen, oder auch sogenannte Wandungsfühler, das sind Fühler, die am Mantel des Tiegels angebracht sind.

Diese ohnehin schon vorhandenen Temperaturfühler werden nun dazu eingesetzt, den Zeitpunkt festzustellen, an dem ein Gargut den Siedepunkt erreicht.

Hat das Gargut den Siedepunkt erreicht, so führt jede weitere Energiezufuhr von da ab dazu, dass das Wasser verdampft, welches im Gargut enthalten ist. Infolgedessen kann jede weitere Energiezufuhr bei der Berechnung berücksichtigt werden, die dazu dient, die gesamte abgegebene Wassermenge zu ermitteln.

In einer weiter bevorzugten Ausführungsform wird vorgesehen, die Genauigkeit der Ermittlung des Wasserverlustes noch weiter zu steigern. Dies gelingt dadurch, dass diejenigen Energieverluste, die nicht mit der Verdampfung des Wassers aus dem Gargut unmittelbar zusammenhängen, bei der Ermittlung abgezogen werden.

Hierzu wird vorgeschlagen, dass diese Energieverluste, die beispielsweise auf Grund von Wärmeleitung durch die Wandung des Gargefäßes eintreten können, für ein bestimmtes Gargerät vorab einmalig experimentell ermittelt werden. Diese Energieverluste können dann als Geräteparameter in der Gerätesteuerung hinterlegt werden.

Es kann sich dabei um konstante Beträge handeln oder aber auch um Erfahrungswerte, die zeitabhängig sind.

Neben den schon eingangs erwähnten Gargefäßen wie Tiegeln, Pfannen, Töpfen und dergleichen, die üblicherweise keinen Deckel aufweisen und/oder während des betreffenden Garvorganges ohne einen solchen Deckel betrieben werden und mithin oberhalb der zuzubereitenden Speisen bzw. des Gargutes offen sind, gibt es auch Gargeräte, bei denen zwar ein druckloses Zubereiten möglich ist, jedoch gleichwohl Deckel oder deckelähnliche Elemente vorgesehen sind, um teilweise geschlossen werden zu können.

Bei derartigen Gargeräten oder jedenfalls bei dieser Betriebsform eines Gargerätes entweicht zwar wie in den oben beschriebenen Fällen ein erheblicher Teil des beim Garvorganges erzeugten Dampfes in die Umgebung, ein Teil jedoch kondensiert an der Unterseite des teilweise geschlossenen Deckels und tropft dann anschließend durchaus beabsichtigt wieder in das Gargut zurück, so dass insoweit kein Wasserverlust entsteht.

Mit einer speziellen Ausführungsform der vorliegenden Erfindung kann auch diesen Anforderungen Rechnung getragen werden.

Hierzu wird zusätzlich ein Sensor eingesetzt, der misst oder abschätzt, ob und wie weit der Deckel geöffnet ist. Daraus kann er ein Maß für die auftretende Kondensierung des aufsteigenden Dampfes ermitteln. Je weiter der Deckel geöffnet ist, desto weniger Kondensation tritt auf. Je weiter der Deckel zugeschoben ist, desto mehr Kondensation tritt auf mit der Folge, dass weniger Wasser ersetzt werden muss.

Da diese Werte für ein spezielles Gerät gerätetypisch sind, kann zunächst vorab werksseitig empirisch festgestellt werden, bei welchem Öffnungsgrad des Deckels welcher Anteil des aufsteigenden Dampfes an der Unterseite des teilweise geöffneten Deckels kondensiert und mithin nicht verloren geht. Dies kann eine lineare oder auch eine durchaus komplizierte Funktion in Abhängigkeit vom Grad der Deckelöffnung sein.

Diese empirisch ermittelte Funktion wird dann während eines Garvorganges mit den Werten besetzt, die von dem Sensor ermittelt werden, der die Deckelöffnung misst oder abschätzt. Die sich daraus ergebende Menge an kondensierendem Wasser kann von den oben genannten Werten wiederum abgezogen werden und muss nicht ersetzt werden.

Der Sensor zur Feststellung des Öffnungsgrades des Deckels kann insbesondere in solchen Fällen sehr einfach bereit gestellt werden, in denen die Deckelöffnung durch eine elektronische Steuerung erfolgt, die etwa in Abhängigkeit des zuzubereitenden Gerichtes eine wunschgemäße Teilöffnung und somit Teilschließung des Garraums des Gargerätes vornimmt, insbesondere also durch einen Motor, der einen Deckel vorschiebt oder zurückzieht oder eine Klappe öffnet oder schließt.

Aus den Werten dieser Steuerung des Motors kann automatisch geschlossen werden, wie weit denn nun tatsächlich der Deckel geöffnet oder geschlossen ist, so dass dieser Wert als Messwert des Sensors verwendet werden kann.

Mit der Erfindung ist auch eine weitere Modifikation möglich. So gibt es Speisen, die anders als in der Mehrzahl der vorstehenden Problemstellungen durchaus bewusst so zubereitet werden, dass ein Teil der zu Beginn im Gargut vorhandenen Flüssigkeit verdampft. Dabei handelt es sich beispielsweise um Soßen, die reduziert werden sollen, also durch den Zubereitungsvorgang auch eine sämigere oder cremigere Konsistenz erhalten sollen.

Dies kann nun durch eine Art "Rückwärtsnutzung" der gleichen erfinderischen Idee umgesetzt werden.

Ein derartiges Verfahren sieht nun so aus, dass vor dem Garvorgang ermittelt wird, welche Menge an Wasser während des Garvorganges verdampft werden soll, um einen gewünschten Reduktionsgrad für das Gargut zu erhalten, dass aus der Menge des zu verdampfenden Wassers ermittelt wird, welche Menge an Energie von der Energieversorgungseinrichtung während des Garvorganges hierzu abgegeben und dem Gargut oder Gargefäß zuzuführen ist, und dass unter Berücksichtigung dieser von der Energieversorgungseinrichtung mittels der Heizmittel abzugebenden Energiemenge die Heizleistung der Heizmittel und/oder die Garzeit gesteuert beziehungsweise modifiziert wird.

Bei einem derartigen Verfahren wird nun nicht während des Garvorganges aktuell die mittels der Heizmittel von der Energieversorgungseinrichtung abgegebene Energie ermittelt und daraus auf den Wasserverlust geschlossen, sondern umgekehrt aus dem beabsichtigten, zur Reduktion der Soße gewünschten Flüssigkeitsverlust umgekehrt ermittelt, welche Energiemenge erforderlich ist, um die entsprechende Verdampfung der gewünschten Flüssigkeitsmenge aus dem Gargut zu erreichen.

Abhängig von dieser Energiemenge kann dann der Garvorgang entsprechend gesteuert werden.

Dabei stehen wiederum die Modifikationen zur Verfügung, die vorstehend als bevorzugte Ausführungsformen des Verfahrens erläutert sind.

Auch bei der Durchführung eines derartigen Verfahrens wird der Nutzer, insbesondere also der Koch, von der permanenten Überwachung des Garvorganges freigestellt. Erforderlich bleibende Arbeiten wie etwa ein gelegentliches Umrühren können Hilfskräften übertragen werden.

Besonders vorteilhaft ist es, wenn gerade diese Form des Verfahrens in Kombination mit Gargeräten vorgenommen wird, die auch über eine automatische Rührvorrichtung verfügen, die beispielsweise ein Umrühren von Soße oder Suppen oder ähnlichen Gargütern im Garraum vornehmen können.

Weitere bevorzugte Merkmale des Verfahrens sind in den Unteransprüchen angegeben. Zusätzlich wird auch ein Gerät vorgeschlagen, welches dieses Verfahren einsetzt.

Im Folgenden wird anhand der Zeichnungen die Erfindung näher erläutert. Es zeigen:

**Figur 1**   eine perspektivische Darstellung einer Ausführungsform eines Gargerätes, mit dem erfindungsgemäße Verfahren durchführbar ist;

**Figur 2**   eine schematische Darstellung eines zeitlichen Ablaufs eines Garvorganges; und

**Figur 3**   eine Blockdarstellung der einzelnen Verfahrensschritte.

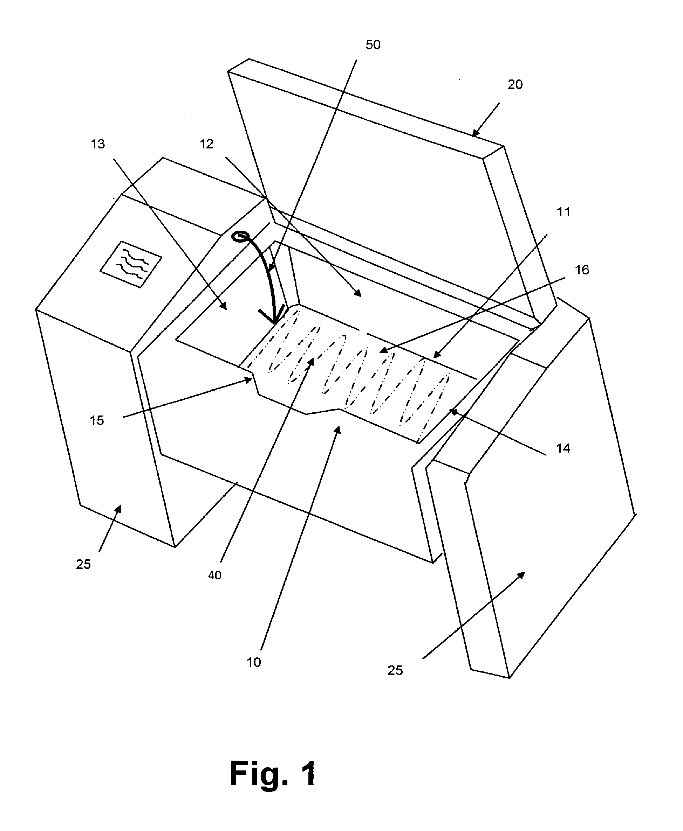

Ein in der **Figur 1** dargestelltes Gargerät besitzt ein Gargefäß 10, hier in Form eines Tiegels 10. Der Tiegel 10 ist beispielsweise wannenförmig oder pfannenförmig. Das Gargefäß 10 beziehungsweise der Tiegel 10 kann sehr unterschiedliche Formen besitzen, beispielsweise halbkugelartig nach Art eines Wok oder kreiszylinderförmig ausgebildet sein. Die dargestellte Ausführungsform dagegen besitzt einen weitgehend flachen oder leicht geneigten Boden 11, von welchem Seitenwände aufragen. In dem dargestellten Ausführungsbeispiel handelt es sich um eine vom Benutzer üblicherweise abgewandte Rückwand 12, zwei an diese angrenzende, etwas kürzere Seitenwände 13 und 14 sowie eine der Rückwand 12 gegenüberliegende und damit dem Benutzer zugewandte Vorderwand 15.

Die Wandung mit den einzelnen Wänden 12, 13, 14, 15 und dem nach unten diese verbindenden Boden 11 umschließen einen Innenraum, der in dem Gargerät zugleich einen Garraum 16 bildet.

In den Wandungen 12, 13, 14, 15 und/oder dem Boden 11 sind entsprechende Heizelemente angeordnet, die den Garraum 16 und seinen Inhalt erwärmen können.

Aufgrund der Wannen-, Pfannen- oder Tiegelform eignet sich das Gargerät insbesondere dazu, in dem Garraum 16 flüssige Speisen wie etwa Suppen, sämige oder cremige Speisen wie etwa Gulasch oder auch Schütt- oder rieselfähige Nahrungsmittel wie Reis, Nudel oder Erbsen zuzubereiten. Ebenso kann in dem Garraum 16 aber beispielsweise auch Rührei zubereitet werden.

Natürlich ist auch die Zubereitung anderer Speisen möglich, auch beispielsweise in mehreren Etagen übereinander, wenn entsprechende Elemente in den Garraum 16 eingestellt werden.

Nach oben ist der Garraum 16 durch einen Deckel 20 verschließbar. Dieser Deckel 20 wird üblicherweise und insbesondere auch in der dargestellten Ausführungsform mit einem Gelenk an der Oberkante der Rückwand 12 angelenkt und kann somit auf- und zugeklappt werden, um geöffnet und verschlossen zu werden.

Auf diese Weise ermöglicht der Deckel 20 eine Zubereitung der Speisen im Garraum 16 bei geschlossenem Deckel 20, also in einem geschlossenen Garraum 16, was sehr häufig erwünscht ist.

In besonders bevorzugten Ausführungsformen kann in einem solchen Garraum 16 sowohl ein Braten wie auch ein Frittieren vorgenommen werden, wenn der Boden 11 etwa als Bratplatte ausgebildet wird. Auch Druckgaren ist ohne Weiteres durch den Deckel 20 möglich, wenn dieser entsprechend fest und abgedichtet verschließbar ist.

Zum Hineingeben der Zutaten und zum Herausnehmen der zubereiteten Speisen kann der Deckel 20 einfach geöffnet werden.

In der Figur 1 ist der Deckel 20 geöffnet dargestellt, sodass man in den Garraum 16 hineinblickt.

Die Erfindung arbeitet auch mit Gargeräten, die keinen derartigen Deckel 20 besitzen oder mit solchen, die sowohl mit verschlossenem als auch mit geöffnetem Deckel 20 arbeiten können.

Der Tiegel 10 ist so in einem Rahmen 25 aufgehängt, dass er um eine horizontale und parallel zur Vorderwand 15 und Rückwand 12 verlaufende Achse gekippt werden kann. Dies dient dazu, dass Speisen aus dem Garraum 16 nach vorne über die Oberkante der Vorderwand 15 in dort bereitstehende Gefäße abgefüllt und zur weiteren Zubereitung oder auch zur Nutzung transportiert werden können.

In dem Rahmen 25 und/oder in den Wänden 12, 13, 14, 15 und/oder dem Boden 11 sind Heizmittel 40 beziehungsweise Heizelemente vorgesehen, mit denen die Speisen im Garraum 16 erhitzt werden können.

Die Heizmittel 40 sind lediglich angedeutet, da sie sich innerhalb oder unterhalb des Bodens 11 in dem dargestellten Ausführungsbeispiel befinden. Die **Heizmittel 40 sind Teil einer (nicht dargestellten)** Energieversorgungseinrichtung, mit der Energie über die Heizmittel 40 in das Gargefäß 10 und/oder den Garraum eingetragen wird.

Zu erkennen ist darüber hinaus eine Wasserzufuhr 50. Mit dieser Wasserzufuhr kann automatisch oder auch manuell gesteuert Wasser in den Garraum 16 mit dem darin befindlichen Gargut gegeben werden. In der dargestellten Ausführungsform ist rein schematisch die Wasserzufuhr 50 so dargestellt, dass sie aus dem Rahmen 25 direkt in den geöffneten Garraum 16 führt. Denkbar sind hier auch Zuführungen durch den Deckel 20 oder durch die Seitenwand 13 oder auch andere Möglichkeiten, Wasser in den Garraum 16 mit dem Gargut zuzuführen.

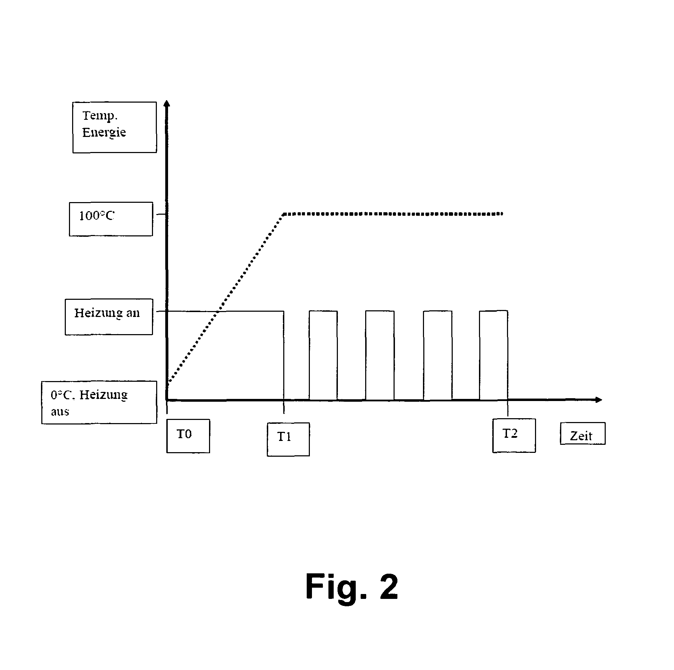

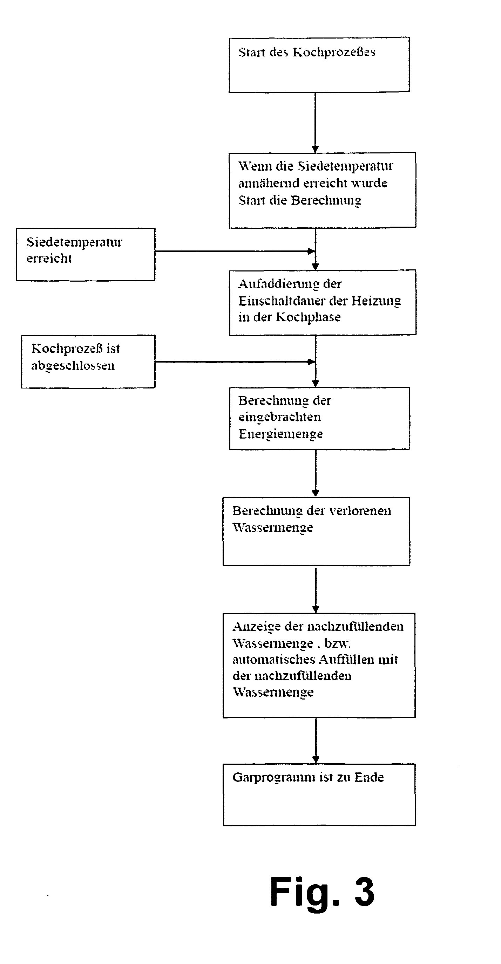

Diese Wasserzufuhr 50 arbeitet in Abhängigkeit von einer Einrichtung, die den Wasserverlust während des Garvorganges des Garguts im Garraum 16 ermittelt. Die Funktionsweise dieser Einrichtung wird in Zusammenhang mit den Figuren 2 und 3 näher beschrieben.

In der **Figur 2** ist der zeitliche Verlauf eines Garverfahrens dargestellt. Nach rechts ist die Zeit aufgetragen, beginnend mit dem Start des Garvorganges und nach rechts fortschreitend bis zu dessen Ende und darüber hinaus.

Nach oben sind einerseits die Temperatur des Garguts und andererseits auch die verbrauchte Energie aufgetragen.

Die punktierte Linie stellt die aktuelle Temperatur des Garguts aufgetragen über die Zeit dar. Die durchgezogene Linie stellt die aktuell zugeführte Energie zu den Heizelementen des Gargerätes dar.

Beginnend zum Zeitpunkt T0 beginnt der Garvorgang bei einer Temperatur, die der Einfachheit halber hier bei 0 °C angedeutet ist. Natürlich kann der Garvorgang auch bei Zimmertemperatur oder anderen Basistemperaturen beginnen.

Zum Zeitpunkt T0 wird die Heizung eingeschaltet, was dadurch angedeutet ist, dass eine in dem dargestellten Beispiel konstante Heizenergie eingeschaltet wird.

Die Temperatur des Gargutes nimmt von da an ungefähr linear zu, die aufgewandte Heizenergie bleibt konstant.

Dieser Vorgang dauert bis zum Zeitpunkt T1, an dem die Temperatur des Garguts den Wert von 100 °C und damit die Siedetemperatur erreicht. Die Temperatur des Gargutes steigt von da an nicht mehr weiter an.

Gleichwohl wird weiterhin in getakteter Form in Zeitabschnitten Heizenergie dem Gargut zugeführt. Dies ist durch schraffierte Flächen angedeutet, die sich unterhalb der jeweils eingeschalteten Bereiche mit eingeschalteter Heizenergie befinden.

Die Heizenergie kann auch in anderer Form zugeführt werden, etwa sinusförmig oder auch mit noch aufwändigeren Regelungen, beispielsweise mit PID-Reglern. Zur Vereinfachung ist hier in der Figur 2 lediglich eine An/Ausschaltung vorgesehen, die eine maximale Heizenergie zuführt oder nicht zuführt.

Die getaktete Form der Zufuhr der Heizenergie soll beispielsweise eine Überkochen und eine Energieverschwendung vermeiden.

Während dieses Bereiches im Anschluss an den Zeitpunkt T1 wird diese zusätzlich zugeführte Energie in dem Gargut in eine Verdampfung des darin enthaltenen Wassers umgesetzt.

Zum Zeitpunkt T2 wird der Garvorgang nun im Wesentlichen beendet. Es wird keine weitere Heizenergie mehr zugeführt. Die gesamte, bereits zugeführte Energiemenge seit dem Zeitpunkt T1 kann leicht ermittelt werden. Sie entspricht der schraffierten Fläche in der Zeit zwischen dem Zeitpunkten T1 und T2.

Wird wie oben erwähnt eine kompliziertere oder aufwändigere Regelung mittels etwas PID-Reglern vorgenommen, so kann die Fläche in Form des zeitlichen Integrals der zugeführten Heizenergie der nur teilweise zugeschalteten Heizung ermittelt werden.

Zusätzlich wird es auch noch möglich, aus der Fläche des nicht schraffierten Rechteckes, welches durch die Zeitpunkte T0 und T1 aufgespannt wird auf die vorhandene Gargutmenge zu schließen. Hier handelt es sich nämlich um die Energiemenge, die bis zum Erreichen der Siedepunkttemperatur erforderlich war, um das Gargut auf die Siedetemperatur zu erwärmen. Diese Schätzung ist insbesondere dann gut zutreffend, wenn das Gargut hauptsächlich aus Wasser besteht.

Bei dieser Berechnung kann man dann unter Berücksichtigung der Wärmekapazität von Wasser unter Berücksichtigung der Temperaturänderung den Wert durch die aufgebrachte Energiemenge teilen und erhält dann den Wert, welche Menge an Gargut beziehungsweise an Wasser (etwa als Masse in Kilogramm) erwärmt wurde. Für die Erfindung in erster Linie relevant ist aber die schraffierte Fläche, aus der die Menge an Wasserverlust bestimmt werden kann.

Zur Erhöhung der Genauigkeit kann man darüber hinaus auch noch diejenigen Energieverluste abziehen, welche nicht zur Verdampfung von Wasser dienen beziehungsweise gedient haben. Um dies vorzunehmen, wird in einer bevorzugten Ausführungsform der Energieverlust, der etwa durch die Wandung des Gargefäßes auftritt, einmalig experimentell ermittelt und dann als Geräteparameter in der Gerätesteuerung hinterlegt.

Im Folgenden soll anhand eines Zahlenbeispiels das Verfahren näher erläutert werden.

In einem Gargerät mit einer automatischen Wasserzufuhr, einer elektronischen Steuerung und einem Kerntemperaturfühler, welcher sich im Gargut befindet, werden als Gargut 20 kg Soße erhitzt.

Nach einer Zeit T1 erreicht diese Soße den Siedepunkt. Es sei nun angenommen, dass die Soße von diesem Zeitpunkt an laut Rezept für zwei Stunden leicht köcheln soll. Die Gerätesteuerung regelt dementsprechend die Heizenergie so, dass sich ein leichtes Sieden einstellt. Nun läuft in der Gerätesteuerung darüber hinaus eine virtuelle Stoppuhr, welche die Einschaltdauer der Heizung während dieser Köchelphase ermittelt.

Die Heizleistung sei zu 10 Kilowatt angenommen. Darüber hinaus wurde zuvor durch Versuche ermittelt, dass in einer Stunde etwa 1 Kilowatt an Wärme verloren geht, die nicht dem Gargut zugeführt wird.

Die virtuelle Stoppuhr beziehungsweise der Zähler weist am Ende des Garvorganges einen Wert von 35 Minuten entsprechend 2.100 Sekunden auf. Das heißt, dass bei diesem Beispiel die Heizung in den zwei Stunden Kochzeit für 2.100 Sekunden eingeschaltet war. Etwaige Unterbrechungszeiträume, also die Zeiträume zwischen den schraffierten Flächen aus der Figur 1, sind in diesen 2.100 Sekunden dementsprechend nicht enthalten.

Die angegebenen Zahlenwerte ergeben folgenden Energieverbrauch:

$$E_{total} = 10.000 \text{ W} \times 2.100 \text{ s} = 21.000.000 \text{ Ws} = 21.000 \text{ kJ}$$

Davon wird der oben erwähnte Wärmeverlust von 1 kWh x 2 Stunden = 7.200 kJ abgezogen.

Es ergibt sich mithin:

$$E_{Heizung} = 21.000 \text{ kJ} - 7.200 \text{ kJ} = 13.800 \text{ kJ}.$$

Die Verdampfungsenthalpie von Wasser beträgt: $\Delta H_v$ = 2.257 kJ/kg (bei 100 °C).

Verdampfungsenthalpie bedeutet hier, dass 2.257 kJ an Energie benötigt werden, um ein Kilogramm Wasser zu verdampfen. Daraus ergibt sich:

Die verdampfte Wassermenge beträgt 13.800 kJ/2.257 kJ/kg ~ 6,11 kg Wasser, welche während des Garvorganges verkocht wurden.

In diesem Beispiel sind die Werte gerundet.

Nachdem nun dieser Wert der verdampften Wassermenge ermittelt ist und sich herausgestellt hat, dass von den ursprünglich 20 kg Soße 6,11 kg Wasser verdampft sind, kann die Gerätesteuerung an ihrer Anzeigeeinrichtung dem Benutzer anzeigen, dass er nunmehr 6,11 kg oder gleichbedeutend 6,11 l an Wasser nachzufüllen hat.

Wenn das Gargerät außerdem über eine automatische Wasserbefüllung verfügt, kann die Wasserdosierung durch die Steuerung auch automatisch erfolgen.

Nachdem das Wasser in der einen oder anderen von diesen Formen zugeführt wurde, ist der Kochvorgang beendet. Aus praktischen Gründen sollte auf der Gargerätesteuerungsanzeige noch eine Aufforderung zum Umrühren erfolgen. In der **Figur 3** sind die verschiedenen Stufen des Vorganges nochmals als Blockschaltdiagramm angedeutet.

Man sieht, dass oben der Kochprozess oder Garvorgang startet und unten beendet wird.

Betrachtet man nun nochmals das obige Zahlenbeispiel, bei dem von ursprünglich 20 kg Soße ausgegangen wird, so sei nun in einer Modifikation angenommen, dass diese Soße ganz bewusst um 50% reduziert werden soll. Eine solche Reduktion von 50% kann etwa gewünscht sein, um das Endprodukt sämiger, cremiger oder auch einfach dickflüssiger verglichen mit den Ausgangssubstanzen zu gestalten.

Berücksichtigt man nun noch einen gerätespezifischen Wärmeverlust von 1 kW so ergibt sich mit der oben schon erwähnten Verdampfungsenthalpie von Wasser von 2.257 kJ/kg (bei 100 °C), dass für die Verdampfung der bewusst aus Flüssigkeit in Dampf umzuwandelnden Flüssigkeitsmenge 2.257 kJ/kg x 10 kg = 22.570 kJ = 22.570 kWs benötigt werden.

Um diese Energiemenge zu berücksichtigen, die dem gewünschten Flüssigkeitsverlust entspricht, kann beispielsweise für eine ebenfalls gewünschte Zeitdauer von 30 Minuten durch eine entsprechende Einstellung der Heizleistung auf 22.570 kWs/1.800 s = 12,54 kW erhalten werden.

Dieser Wert wird bei dem oben genannten gerätespezifischen Wärmeverlust nun noch um 0,5 kW erhöht, so dass sich eine erforderliche Heizleistung von 13,04 kW für 30 Minuten für die erwünschte Reduktion der Soße um 10 Liter ergibt.

Dieser Wert kann dann gegebenenfalls wiederum je nach Ausführungsform des Verfahrens präzisiert und modifiziert werden.

Statt die Heizleistung über eine vorgegebene Zeit von 30 Minuten einzustellen, kann auch mittels einer vorgegebenen Heizleistung eine sich daraus ergebende

Zeit ermittelt werden. Natürlich sind auch Kombinationen aus beiden Vorgaben möglich.

Es ist also nicht nur möglich, das Verfahren so auszuüben, dass ein sich während des Garvorganges ergebender Flüssigkeitsverlust ausgeglichen wird, es kann ebenso erreicht werden, dass ein bewusst gewünschter Flüssigkeitsverlust zu Reduktion eines Gargutes präzise erreicht wird.

In beiden Fällen wird der Nutzer von einem erheblichen Anteil an Überwachungsaufgaben entlastet und zugleich die Durchführung des Garvorganges in eine weiter optimierte Form gebracht.

**Bezugszeichenliste**

10    Gargefäß, beispielsweise Tiegel

11    Boden

12    Rückwand

13    Seitenwand

14    Seitenwand

15    Vorderwand

16    Garraum

20    Deckel

21    Gelenk

25    Rahmen

40    Heizmittel einer Energieversorgungseinrichtung

50    Wasserzufuhr

**Patentansprüche**

1. Verfahren zur Berücksichtigung eines Wasserverlustes während eines Garvorganges in einem Gargerät mit einer Energieversorgungseinrichtung, die einem Gargut oder einem Gargefäß (10) mit darin befindlichem Gargut zur Durchführung des Garvorganges Energie über Heizmittel (40) zuführt, **dadurch gekennzeichnet,**
**dass** während des Garvorganges ermittelt wird, welche Menge an Energie von der Energieversorgungseinrichtung abgegeben und dem Gargut oder Gargefäß (10) zugeführt wird,
**dass** unter Berücksichtigung dieser von der Energieversorgungseinrichtung abgegebenen Energiemenge ermittelt wird, welche Menge an Energie zum Wasserverlust durch Verdampfung des in dem Gargut enthaltenen Wassers beigetragen hat, und
**dass** aus dieser Energiemenge auf den Wasserverlust geschlossen wird.

2. Verfahren zur Berücksichtigung eines Wasserverlustes während eines Garvorganges in einem Gargerät mit einer Energieversorgungseinrichtung,
die einem Gargut oder einem Gargefäß (10) mit darin befindlichem Gargut zur Durchführung des Garvorganges Energie über Heizmittel (40) zuführt, **dadurch gekennzeichnet,**
**dass** vor dem Garvorgang ermittelt wird, welche Menge an Wasser während des Garvorganges verdampft werden soll, um einen gewünschten Reduktionsgrad für das Gargut zu erhalten,
**dass** aus der Menge des zu verdampfenden Wassers ermittelt wird, welche Menge an Energie von der Energieversorgungseinrichtung während des Garvorganges hierzu abgegeben und dem Gargut oder Gargefäß (10) zuzuführen ist, und
**dass** unter Berücksichtigung dieser von der Energieversorgungseinrichtung mittels der Heizmittel (40) abzugebenden Energiemenge die Heizleistung der Heizmittel (40) und/oder die Garzeit gesteuert beziehungsweise modifiziert wird.

3. Verfahren nach Anspruch 1 oder 2,
**dadurch gekennzeichnet,**
**dass** bei der Ermittlung, welche Menge an Energie dem Gargut oder Gargefäß (10) zugeführt wird, nur diejenige Menge an Energie berücksichtigt wird, die nach dem Erreichen des Siedepunktes des Gargutes zugeführt wird.

4. Verfahren nach Anspruch 3,
**dadurch gekennzeichnet,**
**dass** zur Ermittlung des Siedepunktes des Gargutes Kerntemperaturfühler oder Wandungsfühler eingesetzt werden.

5. Verfahren nach einem der vorstehenden Ansprüche,
**dadurch gekennzeichnet,**
**dass** bei der Ermittlung, welche Menge an Energie dem Gargut oder Gargefäß (10) zugeführt wird, die durch Wärmeleitung während des Garvorganges verlorengehende Menge an Energie abgezogen wird.

6. Verfahren nach einem der vorstehenden Ansprüche,
**dadurch gekennzeichnet,**
**dass** die Menge an Energie, die dem Gargut oder Gargefäß (10) zugeführt wird, durch Multiplizierung der Einschaltdauer der Heizmittel (40) mit der Heizleistung der Heizmittel ermittelt wird.

7. Verfahren nach einem der vorstehenden Ansprüche,
**dadurch gekennzeichnet,**
**dass** die Menge an Energie, die dem Gargut zugeführt wird, durch Integration der zugeführten Heizleistung über die Zeit ermittelt wird.

8. Verfahren nach einem der vorstehenden Ansprüche,
**dadurch gekennzeichnet,**
**dass** ermittelt wird, ob und in welchem Maße ein Deckel (20) das Gargut in dem Gargefäß (10) gegenüber dem Außenraum abschließt,
**dass** aus dem Grad der Öffnung des Deckels (20) unter Verwendung einer vorab empirisch ermittelten Funktion die Menge an Wasser ermittelt wird, welches von dem Wasserverlust während des Garvorganges aus dem Gargut durch Kondensierung an dem Deckel (20) verbleibt und dem Gargut wieder zugeführt wird, und
**dass** die auf diese Weise ermittelte Menge an Wasser von dem ermittelten Gesamtverlust abgezogen wird.

**9.** Verfahren nach einem der vorstehenden Ansprüche,
**dadurch gekennzeichnet,**
**dass** der Wasserverlust dadurch ausgeglichen wird, dass über eine automatische Wasserdosierung die Wassermenge dem Gargut automatisch in der ermittelten Menge des Wasserverlustes mittels einer Wasserzufuhr (50) wieder zugeführt wird.

**10.** Verfahren nach Anspruch 9,
**dadurch gekennzeichnet,**
**dass** die Zufuhr der Ausgleichswassermenge nach Anzeige und mittels Tastendruck oder anderem manuellen oder akustischen Signal des Benutzers erfolgt.

**11.** Gargerät mit einer Energieversorgungseinrichtung, die einem Gargut oder einem Gargefäß mit darin befindlichem Gargut zur Durchführung des Garvorganges Energie zuführt, mit einer Einrichtung zur Berücksichtigung eines Wasserverlustes während eines Garvorganges unter Einsatz eines Verfahrens nach einem der vorstehenden Ansprüche.

**Claims**

**1.** Method for taking into account a loss of water during a cooking process in a cooking appliance having a power supply means for supplying energy to food or to a cooking vessel (10) containing food for a cooking process through a heating means (40), **characterised in that**
during the cooking process it is determined how much energy is given off by the power supply means and supplied to the food being cooked or the cooking vessel (10), that, taking into account the amount of energy given off by the said power supply means, the amount of energy that has contributed to the water loss by the evaporation of the water contained in the food is determined, and that the water loss is calculated from this amount of energy.

**2.** Method for taking into account a loss of water during a cooking process in a cooking appliance having a power supply means for supplying energy to food or to a cooking vessel (10) containing food for a cooking process through a heating means (40), **characterised in that** prior to the cooking process, the amount of water that is evaporated during the cooking process in order to achieve a required degree of reduction of the food being cooked, is determined, that from the amount of water to be evaporated, the amount of energy required from the power supply means during the cooking process and supplied to the food being cooked or to the cooking vessel is calculated and that, having regard to the amount of energy to be given off by the power supply means through the heating means (40), the heating means (40) and/or the cooking time can be either controlled or modified.

**3.** Method according to Claim 1 or 2 above, **characterised in that** when determining the amount of energy that is supplied to the food being cooked or to the cooking vessel (10), only that amount of energy that is required to bring the food being cooked to its boiling point is supplied.

**4.** Method according to Claim 3 above, **characterised in that** a core temperature sensor or a wall sensor is used to establish the boiling point of the food being cooked.

**5.** Method according to any one of the above claims, **characterised in that** when calculating the amount of energy supplied to the food being cooked or to the cooking vessel (10), the amount of energy lost by heat conduction during the cooking process is deducted.

**6.** Method according to any one of the above claims, **characterised in that** the amount of energy supplied to the food being cooked or to the cooking vessel is determined by multiplying the amount of time during which the heating means (40) is switched on by the heat output of the heating means (40).

**7.** Method according to any one of the above claims, **characterised in that** the amount of energy supplied to the food being cooked is determined by integrating the amount of heat supplied over time.

**8.** Method according to any one of the above claims, **characterised in that** whether, and to what extent, a lid (20) protects the food contained in the cooking vessel (10) from the outside atmosphere, that, from the degree of opening the lid (20), using a previously empirically determined function, it is determined how much water from the water loss during the cooking process remains on the lid (20) as condensation and is returned to the food being cooked, and that the amount of water calculated in this way is then deducted from the total calculated water loss.

9. Method according to any one of the above claims, **characterised in that** the water loss is compensated automatically by an automatic metering of the amount of water allowing the amount of the water loss to be restored by the water supply system (50).

10. Method according to any one of the above claims, **characterised in that** the supply of compensating water is effected by means of a display and the pressing of a button or by any other manual or acoustic signal by the user.

11. Cooking appliance with an energy supply device supplying energy to food to be cooked or to a cooking vessel containing food for carrying out the cooking process, with a device to take account of the water lost during a cooking process and utilising a process according to any of the preceding claims.


**Revendications**

1. Procédé de prise en compte d'une perte d'eau lors d'un processus de cuisson dans un appareil de cuisson comprenant un dispositif d'alimentation en énergie qui approvisionne en énergie un produit à cuire ou un récipient de cuisson (10) avec le produit situé dans ce dernier par l'intermédiaire d'éléments chauffants (40) pour la mise en oeuvre du processus de cuisson,
   **caractérisé en ce que**
   il est déterminé, pendant le processus de cuisson, la quantité d'énergie cédée par le dispositif d'alimentation en énergie et transmise au produit à cuire ou au récipient de cuisson (10),
   il est déterminé, compte tenu de cette quantité d'énergie cédée par le dispositif d'alimentation en énergie, la quantité d'énergie qui a contribué à la perte d'eau par évaporation de l'eau renfermée dans le produit à cuire, et
   la perte d'eau est déduite de cette quantité d'énergie.

2. Procédé de prise en compte d'une perte d'eau lors d'un processus de cuisson dans un appareil de cuisson comprenant un dispositif d'alimentation en énergie qui alimente en énergie un produit à cuire ou un récipient de cuisson (10) avec le produit situé dans ce dernier par l'intermédiaire d'éléments chauffants (40) pour la mise en oeuvre du processus de cuisson,
   **caractérisé en ce que**
   il est déterminé, avant le processus de cuisson, la quantité d'eau qui doit être évaporée pendant ce processus afin d'obtenir un taux de réduction souhaité pour le produit à cuire,
   il est déterminé, à partir de la quantité d'eau à évaporer, la quantité d'énergie à céder par le dispositif d'alimentation en énergie pendant le processus de cuisson et à transmettre au produit à cuire ou au récipient de cuisson (10), et compte tenu de cette quantité d'énergie à céder par le dispositif d'alimentation en énergie au moyen des éléments chauffants (40), la puissance calorifique des éléments chauffants (40) et/ou la durée de cuisson sont contrôlées et/ou modifiées.

3. Procédé selon l'une des revendications 1 et 2,
   **caractérisé en ce que**,
   lors de la détermination de la quantité d'énergie transmise au produit à cuire ou au récipient de cuisson (10), seule est prise en compte la quantité d'énergie transmise après que le point d'ébullition du produit à cuire a été atteint.

4. Procédé selon la revendication 3,
   **caractérisé en ce que**
   une sonde de température à coeur ou un capteur de température de paroi est utilisé pour la détermination du point d'ébullition du produit à cuire.

5. Procédé selon l'une des revendications précédentes, **caractérisé en ce que**
   lors de la détermination de la quantité d'énergie transmise au produit à cuire ou au récipient de cuisson (10), la quantité d'énergie perdue par conduction thermique pendant le processus de cuisson est soustraite.

6. Procédé selon l'une des revendications précédentes, **caractérisé en ce que**
   la quantité d'énergie transmise au produit à cuire ou au récipient de cuisson (10) est déterminée par multiplication de la durée de commutation des éléments chauffants (40) par la puissance calorifique de ces derniers.

**7.** Procédé selon l'une des revendications précédentes, **caractérisé en ce que**
la quantité d'énergie transmise au produit à cuire est déterminée par intégration de la puissance calorifique d'alimentation par rapport au temps.

**8.** Procédé selon l'une des revendications précédentes, **caractérisé en ce que**
il est déterminé si, et dans quelle mesure, un couvercle (20) ferme le produit à cuire dans le récipient de cuisson (10) par rapport à l'espace extérieur,
la quantité d'eau est déterminée à partir du degré d'ouverture du couvercle (20) en utilisant une fonction préalablement déterminée de façon empirique, laquelle eau subsiste sur le couvercle (20) par condensation, de la perte d'eau du produit à cuire pendant le processus de cuisson, et est renvoyée dans le produit à cuire, et
la quantité d'eau ainsi déterminée est soustraite de la perte totale déterminée.

**9.** Procédé selon l'une des revendications précédentes, **caractérisé en ce que**
la perte d'eau est compensée du fait que par l'intermédiaire d'un dosage d'eau automatique, la quantité d'eau est renvoyée automatiquement au produit à cuire dans la quantité déterminée au moyen d'une arrivée d'eau (50).

**10.** Procédé selon la revendication 9,
**caractérisé en ce que**
l'arrivée de la quantité d'eau de compensation s'effectue suivant l'affichage et au moyen d'une pression sur touche ou autre signal manuel ou acoustique de l'utilisateur.

**11.** Appareil de cuisson comprenant un dispositif d'alimentation en énergie qui alimente en énergie un produit à cuire ou un récipient de cuisson avec du produit situé dans ce dernier pour la mise en oeuvre du processus de cuisson avec un dispositif de prise en compte d'une perte d'eau pendant un processus de cuisson en mettant en oeuvre un procédé selon l'une des revendications précédentes.

**Fig. 1**

Temp.
Energie

100°C

Heizung an

0°C. Heizung
aus

T0

T1

T2

Zeit

# Fig. 2

```
┌─────────────────────────┐
│  Start des Kochprozeßes  │
│                         │
└─────────────────────────┘
            │
            ▼
┌─────────────────────────┐
│  Wenn die Siedetemperatur│
│  annähernd erreicht wurde│
│  Start die Berechnung    │
└─────────────────────────┘
            │
┌──────────────────┐      │
│ Siedetemperatur  │──────┤
│ erreicht         │      ▼
└──────────────────┘   ┌─────────────────────────┐
                       │  Aufaddierung der        │
                       │  Einschaltdauer der Heizung│
                       │  in der Kochphase        │
┌──────────────────┐   └─────────────────────────┘
│ Kochprozeß ist   │──────┤
│ abgeschlossen    │      ▼
└──────────────────┘   ┌─────────────────────────┐
                       │  Berechnung der          │
                       │  eingebrachten           │
                       │  Energiemenge            │
                       └─────────────────────────┘
                                  │
                                  ▼
                       ┌─────────────────────────┐
                       │  Berechnung der verlorenen│
                       │  Wassermenge             │
                       │                         │
                       └─────────────────────────┘
                                  │
                                  ▼
                       ┌─────────────────────────┐
                       │  Anzeige der nachzufüllenden│
                       │  Wassermenge . bzw.      │
                       │  automatisches Auffüllen mit│
                       │  der nachzufüllenden     │
                       │  Wassermenge             │
                       └─────────────────────────┘
                                  │
                                  ▼
                       ┌─────────────────────────┐
                       │  Garprogramm ist zu Ende │
                       │                         │
                       └─────────────────────────┘
```

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8223560 U1
- DE 10043771 C2
- DE 102004012824 A1
- EP 0520565 A1
- EP 1847203 A1
- DE 102008036684 A1
- DE 10052137 A1
- EP 1199015 A2
- DE 4136133 A1